# EUROPEAN PATENT APPLICATION

(11) **EP 4 852 115 A1**
(43) Date of publication of application: **09.12.2026**
(21) Application number: 26150054.0
(22) Date of filing: 02.01.2026
(51) Int. Cl.: H01M 10/04, H01M 10/058, H01M 50/46

(54) **SECONDARY BATTERY MANUFACTURING DEVICE**

(30) Priority: 04.06.2025 KR 20250073039
(71) Applicant: SAMSUNG SDI CO., LTD., Yongin-si, Gyeonggi-do 17084 (KR)
(72) Inventor: PARK, In Gyu, 16678 Suwon-si (KR); JUNG, Seung Jin, 16678 Suwon-si (KR); HWANG, Tae Won, 16678 Suwon-si (KR)
(74) Representative: Marks & Clerk LLP

(57) **Abstract**

A secondary battery manufacturing device includes: a first light configured to project infrared (IR) light from an outside of a first side in a thickness direction of a first electrode plate and a first separator, that overlap while traveling to the first electrode plate and the first separator; a camera configured to detect the infrared light from an outside of a second side in the thickness direction of the first electrode plate and the first separator such that positions of the first electrode plate and the first separator are measured; a first adjuster located upstream of the camera along a traveling direction of the first electrode plate and configured to adjust the position of the first electrode plate in a width direction of the first electrode plate; and a controller configured to calculate a first difference value.

## Description

### BACKGROUND

### 1. Field

Aspects of embodiments of the present disclosure relate to a secondary battery manufacturing device.

### 2. Description of the Related Art

In general, with the rapid spread of electronic devices using batteries, such as mobile phones, notebook computers, and electric vehicles, the demand for secondary batteries with high energy density and high capacity has rapidly increased. Accordingly, research and development for improving the performance of lithium secondary batteries is being actively conducted.

In a cylindrical secondary battery among secondary batteries, an electrode assembly wound in the form of a jelly roll may be accommodated in a cylindrical case. The electrode assembly includes electrode plates and a separator interposed between the electrode plates.

The aforementioned information disclosed in this background section is provided for enhancement of understanding of the background technology of the present disclosure, and therefore may contain information that does not constitute the related art.

### SUMMARY

According to an aspect of embodiments of the present disclosure, a secondary battery manufacturing device that correctly aligns an electrode plate with respect to a separator in an electrode assembly is provided.

However, aspects and technical objectives to be achieved by the present disclosure are not limited to the above-described aspects and objectives, and other aspects and objectives, which are not described above, will be clearly understood by those skilled in the art through the following description of the disclosure.

According to one or more embodiments of the present disclosure, a secondary battery manufacturing device includes: a first light configured to project infrared (IR) light from an outside of a first side in a thickness direction of a first electrode plate and a first separator, that overlap while traveling, to the first electrode plate and the first separator; a camera configured to detect the infrared light from an outside of a second side in the thickness direction of the first electrode plate and the first separator such that positions of the first electrode plate and the first separator are measured; a first adjuster that is located upstream of the camera along a traveling direction of the first electrode plate and configured to adjust the position of the first electrode plate in a width direction of the first electrode plate; and a controller configured to calculate a first difference value, which is a difference value of a position value of the first electrode plate with respect to a position value of the first separator, based on an image detected through the camera, and control operation of the first adjuster such that the first difference value converges to a first reference value.

The position value of the first separator may be a position value of a first end in a width direction of the first separator, and the position value of the first electrode plate may be a position value of a first end in the width direction of the first electrode plate.

If a widthwise size of the first separator is larger than a widthwise size of the first electrode plate, and in the image, if a region where the first separator and the first electrode plate are not present is referred to as a background region, a region where the first separator is present but the first electrode plate is not present is referred to as a first region, and a region where the first separator and the first electrode plate overlap is referred to as a second region. In some embodiments the background region may appear brighter than the first region, and the first region may appear brighter than the second region.

The first adjuster may include a first adjustment roller that is in contact (e.g., close contact) with the first electrode plate and moves in the width direction of the first electrode plate.

The first adjustment roller may be spaced apart from the first electrode plate when the first difference value is equal to the first reference value.

The first adjustment roller may include a pair of first adjustment rollers. One of the pair of first adjustment rollers may be located to face a side surface in the thickness direction of the first electrode plate. The other of the pair of first adjustment rollers may be located to face another side surface in the thickness direction of the first electrode plate.

A second electrode plate and a second separator may overlap the first electrode plate and the first separator and pass between the first light and the camera. The secondary battery manufacturing device may further include a second adjuster that is located upstream of the camera along a traveling direction of the second electrode plate and configured to adjust a position of the second electrode plate in a width direction of the second electrode plate. The controller may be configured to calculate a second difference value, which is a difference value of a position value of the second electrode plate with respect to a position value of the first electrode plate, based on the image, and control operation of the second adjuster such that the second difference value converges to a second reference value.

The secondary battery manufacturing device may further include a winder configured to wind the overlapping first separator, second separator, first electrode plate, and second electrode plate together.

The secondary battery manufacturing device may further include a second light configured to project visible light to the second electrode plate, and the camera may be configured to detect visible light projected from the second light and reflected from the second electrode plate.

The position value of the second electrode plate may be a position value of a first end in the width direction of the second electrode plate.

A widthwise size of the first separator and a widthwise size of the second separator may be the same. The widthwise size of the first separator may be larger than a widthwise size of the first electrode plate. The widthwise size of the first electrode plate may be larger than a widthwise size of the second electrode plate.

The first separator, the first electrode plate, the second separator, and the second electrode plate may sequentially overlap in that order away from the first light.

In the image, if a region where the first separator, the first electrode plate, the second separator, and the second electrode plate are not present is referred to as a background region, a region where the first separator and the second separator overlap and the first electrode plate and the second electrode plate are not present is referred to as a first region, a region where the first separator, the first electrode plate, and the second separator overlap and the second electrode plate is not present is referred to as a second region, and a region where the first separator, the first electrode plate, the second separator, and the second electrode plate overlap is referred to as a third region. In some embodiments, the background region may appear brighter than the first region, the first region may appear brighter than the second region, the third region may appear brighter than the second region, and the second region may be located between the first region and the third region.

The second adjuster may include a second adjustment roller that is in contact (e.g., close contact) with the second electrode plate and moves in the width direction of the second electrode plate.

The second adjustment roller may be spaced apart from the second electrode plate when the second difference value is equal to the second reference value.

The second adjustment roller may include a pair of second adjustment rollers. One of the pair of second adjustment rollers may be located to face a side surface in a thickness direction of the second electrode plate. The other of the pair of second adjustment rollers may be located to face another side surface in the thickness direction of the second electrode plate.

A wavelength range of the infrared light may be 700 to 1000 nm.

The first light may include a plurality of infrared light light-emitting diodes (LEDs) that are arranged along a width direction of the first separator and configured to project the infrared light to the first separator and the first electrode plate.

The first light may include an infrared light transmission roller that has a circular cross-section and extends in the width direction of the first separator such that the plurality of infrared light LEDs are accommodated therein, transmits the infrared light, supports the first separator, and rotates while in contact with the first separator as the first separator travels.

When the infrared light transmission roller rotates, the plurality of infrared light LEDs may not rotate.

At least some of the above and other features of the invention are set out in the claims.

### BRIEF DESCRIPTION OF THE DRAWINGS

The above and other aspects, objects, features, and advantages of the present disclosure will become more apparent to those of ordinary skill in the art by describing some embodiments thereof in further detail with reference to the accompanying drawings, in which:
FIG. 1 is a schematic diagram of a secondary battery manufacturing device according to an embodiment of the present disclosure;
FIG. 2 is a cross-sectional view showing separators and electrode plates at a moment of passing through a first light in FIG. 1;
FIG. 3 is a plan view showing the separators and the electrode plates in FIG. 2 viewed from above;
FIG. 4 is an enlarged plan view showing a region "A" in FIG. 3, and showing a state in which a first electrode plate and a second electrode plate are correctly aligned;
FIG. 5 is a plan view corresponding to FIG. 4, but showing a state in which the first electrode plate and the second electrode plate are not correctly aligned;
FIG. 6 is a cross-sectional view taken along the line S1-S1 in FIG. 1;
FIG. 7 is a cross-sectional view taken along the line S2-S2 in FIG. 6;
FIG. 8 is a front view of a first adjustment unit in FIG. 1; and
FIG. 9 is a front view of a second adjustment unit in FIG. 1.

### DETAILED DESCRIPTION

Herein, some embodiments of the present disclosure will be described in further detail with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

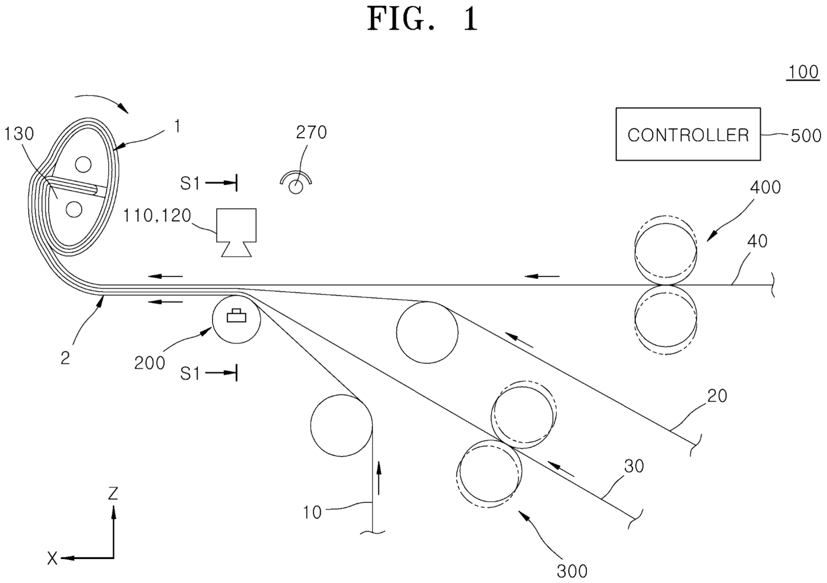

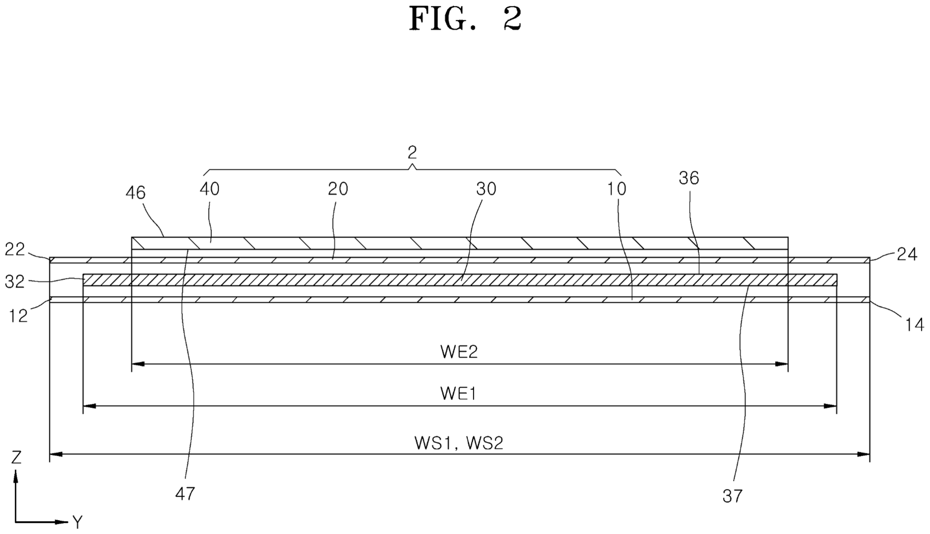

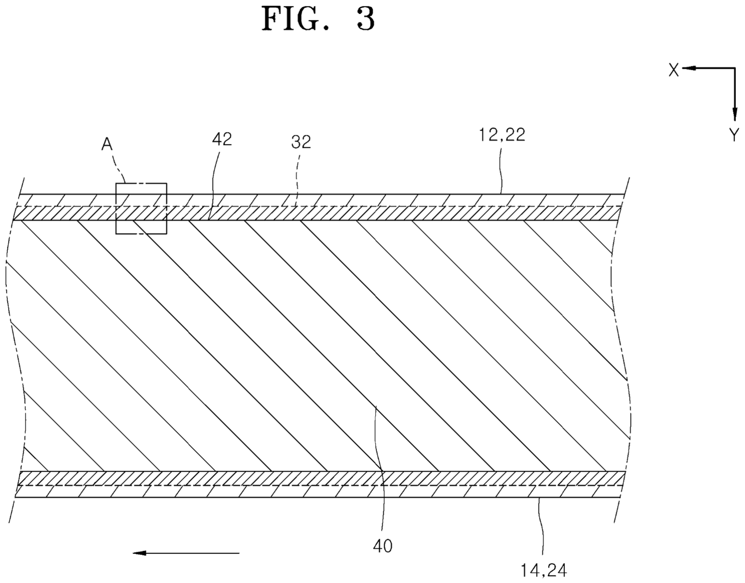

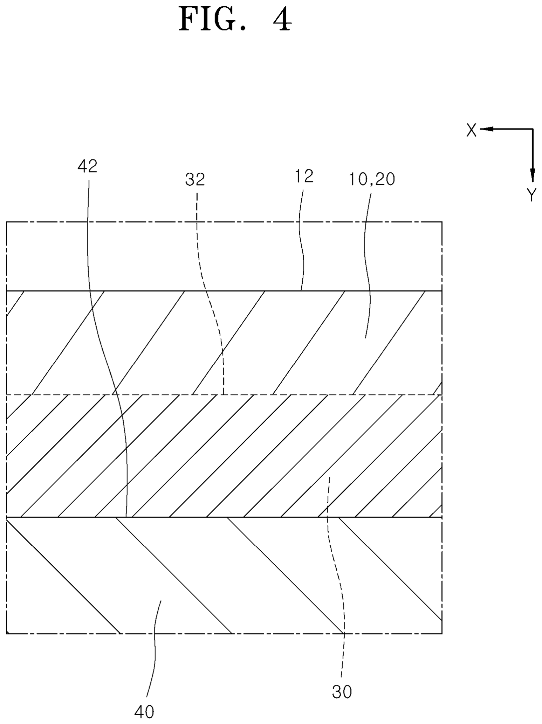

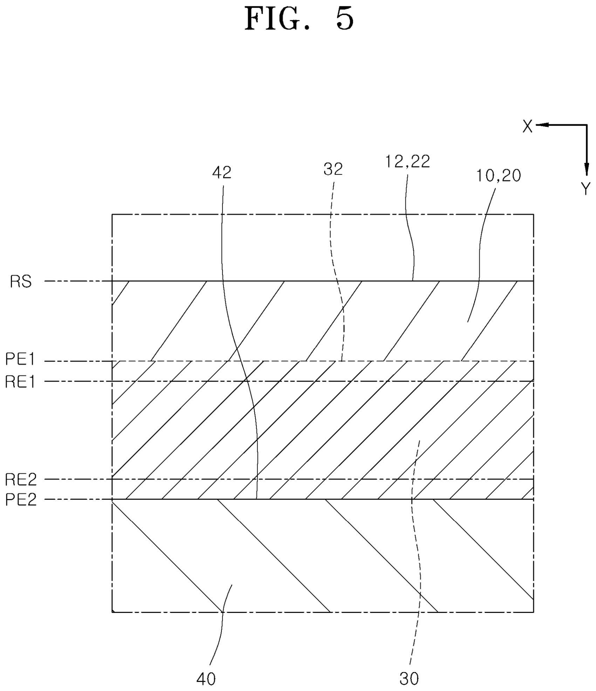

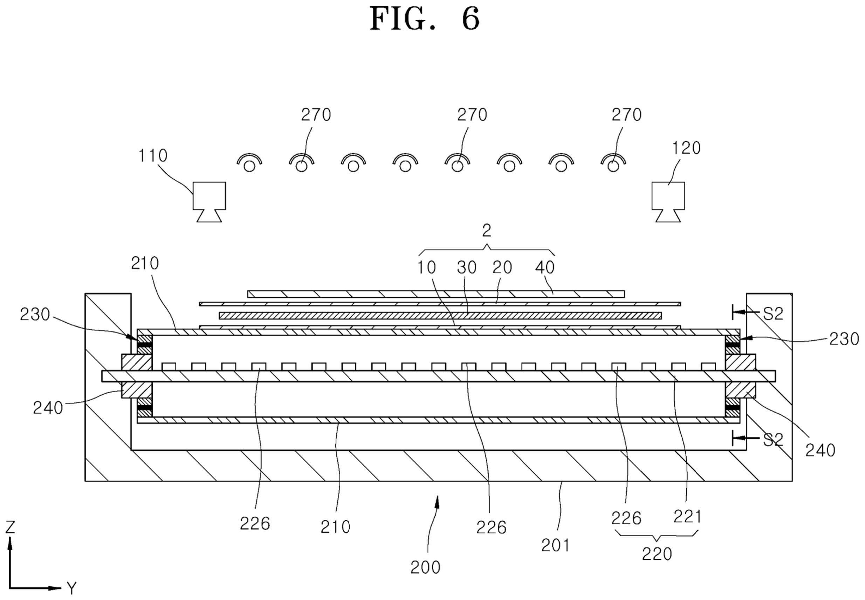

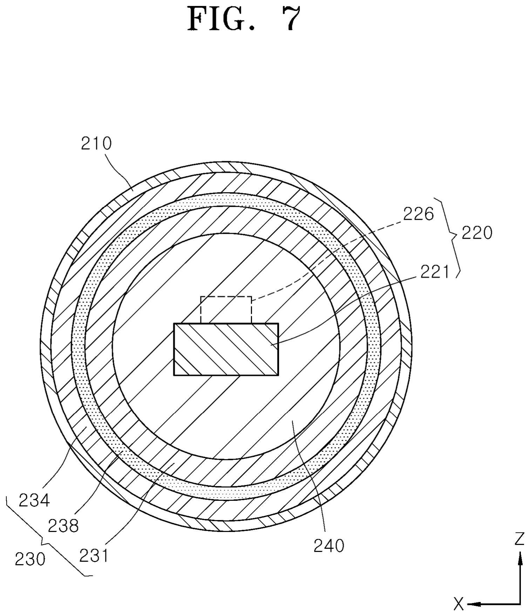

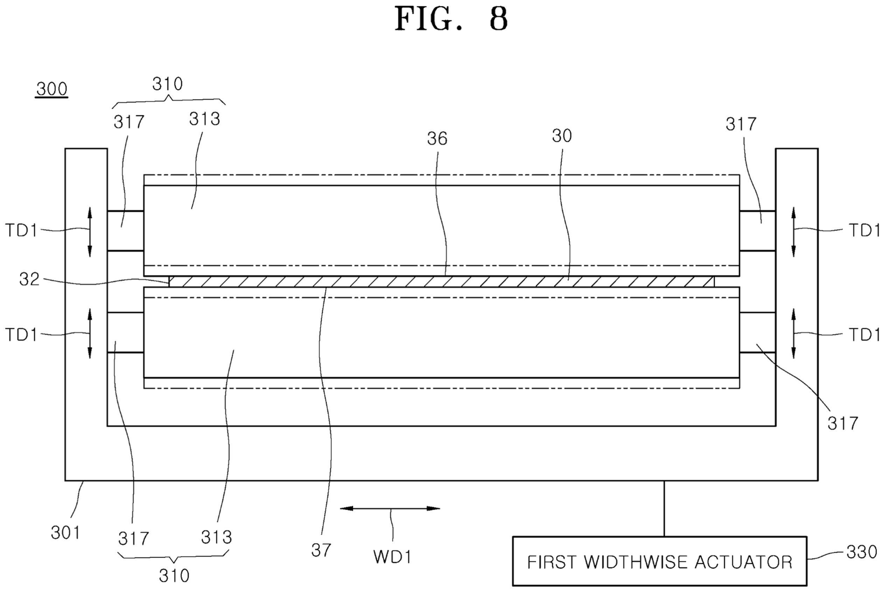

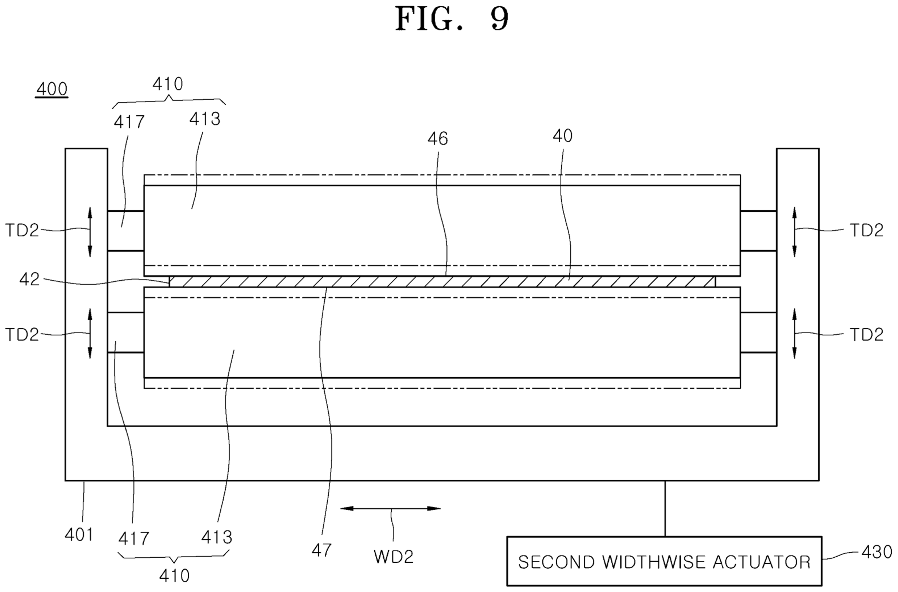

FIG. 1 is a schematic diagram of a secondary battery manufacturing device according to an embodiment of the present disclosure; FIG. 2 is a cross-sectional view showing separators and electrode plates at a moment of passing through a first light in FIG. 1; FIG. 3 is a plan view showing the separators and electrode plates in FIG. 2 viewed from above; FIG. 4 is an enlarged plan view showing a region "A" in FIG. 3, and showing a state in which a first electrode plate and a second electrode plate are correctly aligned; FIG. 5 is a plan view corresponding to FIG. 4, but showing a state in which the first electrode plate and the second electrode plate are not correctly aligned; FIG. 6 is a cross-sectional view taken along the line S1-S in FIG. 1; FIG. 7 is a cross-sectional view taken along the line S2-S2 in FIG. 6; FIG. 8 is a front view of a first adjustment unit in FIG. 1; and FIG. 9 is a front view of a second adjustment unit in FIG. 1.

Referring to FIGS. 1 to 7, a secondary battery manufacturing device 100 according to an embodiment of the present disclosure includes a first light 200, cameras 110 and 120, a first adjustment unit, or first adjuster, 300, and a controller 500.

The secondary battery manufacturing device 100 manufactures an electrode assembly 1 wound in the form of a jelly roll by winding separators 10 and 20 and electrode plates 30 and 40.

The first light 200 projects infrared (IR) light from an outside of a first side in a thickness direction of a first electrode plate 30 and a first separator 10, which overlap while traveling, to the first electrode plate 30 and the first separator 10.

The cameras 110 and 120 detect the infrared light from an outside of a second side in the thickness direction of the first electrode plate 30 and the first separator 10 such that positions of the first electrode plate 30 and the first separator 10 are measured.

For example, the thickness direction of the first electrode plate 30 and the first separator 10 passing between the first light 200 and the cameras 110 and 120 may be parallel to a Z-axis. Positions of the cameras 110 and 120 may be positions further spaced apart in a positive (+) Z-axis direction than a position of the first light 200.

The electrode assembly 1 may further include a second separator 20 and a second electrode plate 40 in addition to the first separator 10 and the first electrode plate 30. The second electrode plate 40 and the second separator 20 may overlap the first electrode plate 30 and the first separator 10 and pass between the cameras 110 and 120.

The secondary battery manufacturing device 100 may further include a winder 130 which winds the first separator 10, the second separator 20, the first electrode plate 30, and the second electrode plate 40 together.

Before being wound, an electrode assembly 2 in which the first separator 10, the first electrode plate 30, the second separator 20, and the second electrode plate 40 sequentially overlap in the positive (+) Z-axis direction may pass between the first light 200 and the cameras 110 and 120, and may be wound by the winder 130 and formed as a jelly roll-shaped electrode assembly 1. The jelly roll-shaped electrode assembly 1 may be accommodated, for example, in a cylindrical can (not shown) of a secondary battery.

The electrode assemblies 1 and 2 may function as a unit structure which performs charging and discharging operations of power in the secondary battery.

In an embodiment, the first electrode plate 30 may function as a negative electrode of the electrode assemblies 1 and 2. The first electrode plate 30 may be formed to have a form of a foil including a metal material, such as copper, a copper alloy, nickel, or a nickel alloy.

A type, size, shape, or the like of the first electrode plate 30 is not particularly limited as long as the first electrode plate 30 has conductivity and does not cause a chemical change in the secondary battery. A first active material layer may be applied to at least a portion of the first electrode plate 30. The first active material layer may be applied to both, or opposite, surfaces 36 and 37 in a thickness direction of the first electrode plate 30, or may be applied to only one of the two surfaces 36 and 37 of the first electrode plate 30.

In an embodiment, the first electrode plate 30 functions as a negative electrode, and the first active material layer may include a negative electrode active material.

The negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite, such as amorphous, electrode plate-like, flaky, spherical, or fibrous natural graphite or artificial graphite, and examples of the amorphous carbon may include soft carbon or hard carbon, mesophase pitch carbide, calcined coke, and the like.

In an embodiment, an alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

As the material capable of doping and dedoping lithium, a Si-based negative electrode active material or Sn-based negative electrode active material may be used. The Si-based negative electrode active material may be any of silicon, a silicon-carbon composite, SiOₓ (x is 1 or 2), an Si-Q alloy (where Q is selected from alkali metals, alkaline earth metals, group 13 elements, group 14 elements (excluding Si), group 15 elements, group 16 elements, transition metals, rare earth elements, and a combination thereof), or a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in the form of silicon particles of which surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles, for example, the silicon primary particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with the carbon-based negative electrode active material.

The first active material layer may further include a negative electrode conductive material and a negative electrode binder.

The negative electrode conductive material imparts conductivity to the first active material layer, and any suitable material which does not cause a chemical change and is electrically conductive may be used. Examples of the negative electrode conductive material may include a carbon-based material, such as natural graphite, artificial graphite, carbon black, acetylene black, Ketjen black, carbon fibers, carbon nanofibers, and carbon nanotubes, a metal-based material in the form of a metal powder or metal fiber containing copper, nickel, aluminum, silver, or the like, a conductive polymer, such as a polyphenylene derivative, or a mixture thereof.

The negative electrode binder may attach particles constituting the negative electrode active material to each other well, and also attach the negative electrode active material to the first electrode plate 30 well.

An example of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

If the aqueous binder is used as the negative electrode binder, a cellulose-based compound may be further included to impart viscosity. The cellulose-based compound may be used by mixing one or more of carboxymethyl cellulose, hydroxypropyl methyl cellulose, methyl cellulose, or alkali metal salts thereof. In an embodiment, Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

The first electrode plate 30 may be electrically connected to the cylindrical can (not shown) of the secondary battery. For example, the first electrode plate 30 may be electrically connected to a bottom of the cylindrical can by a first electrode tab (not shown). As the first electrode plate 30 functions as the negative electrode of the electrode assemblies 1 and 2, the bottom of the cylindrical can may function as a negative electrode terminal of the secondary battery.

In an embodiment, the second electrode plate 40 may function as a positive electrode of the electrode assemblies 1 and 2. The second electrode plate 40 may be formed to have a form of a foil including a metal material, such as aluminum or an aluminum alloy. The type, size, shape or the like of the second electrode plate 40 is not particularly limited as long as the second electrode plate 40 has conductivity and does not cause a chemical change in the battery.

A second active material layer may be applied to at least a portion of the second electrode plate 40. The second active material layer may be applied to both, or opposite, surfaces 46 and 47 in a thickness direction of the second electrode plate 40, or may be applied to only one of the two surfaces 46 and 47 of the second electrode plate 40.

In an embodiment, the second electrode plate 40 functions as the positive electrode, and the second active material layer may include a positive electrode active material.

The positive electrode active material may be a compound capable of reversible intercalating and deintercalating of lithium (a lithiated intercalation compound). In an embodiment, one or more of composite oxides of lithium and a metal selected from cobalt, manganese, nickel, iron and a combination thereof may be used.

For example, the positive electrode active material may include at least one of a lithium-iron-phosphorus oxide (LiFePO₄, LFP), a lithium-manganese-iron-phosphorus oxide (LiMnFePO₄, LMFP), and a lithium-nickel-cobalt-manganese oxide (LiNiₓCo_{y}Mn_{z}O₂, NCM). Here, 0<x<1, 0<y<1, 0<z<1, and x+y+z=1 may be satisfied. The positive electrode active material may include only one of the lithium-iron-phosphorus oxide (LiFePO₄, LFP), the lithium-manganese-iron-phosphorus oxide (LiMnFePO₄, LMFP), and the lithium-nickel-cobalt-manganese oxide (LiNiₓCo_{y}Mn_{z}O₂, NCM), and may include any two or all of the lithium-iron-phosphorus oxide (LiFePO₄, the LFP), lithium-manganese-iron-phosphorus oxide (LiMnFePO₄, LMFP), and the lithium-nickel-cobalt-manganese oxide (LiNixCoyMnzO₂, NCM).

The second active material layer may further include a positive electrode conductive material.

The positive electrode conductive material imparts conductivity to the second active material layer, and any suitable material which does not cause a chemical change and is electrically conductive may be used. Examples of the positive electrode conductive material may include a carbon-based material, such as natural graphite, artificial graphite, carbon black, acetylene black, Ketjen black, carbon fibers, carbon nanofibers, carbon nanotubes, or the like, a metal-based material in the form of a metal powder or metal fiber containing copper, nickel, aluminum, silver, or the like a conductive polymer, such as a polyphenylene derivative, or a mixture thereof.

The second active material layer may further include a positive electrode binder.

The positive electrode binder may attach the particles constituting the positive electrode active material to each other well, and also attach the positive electrode active material to the second electrode plate 40 well.

An example of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

If the aqueous binder is used as the positive electrode binder, a cellulose-based compound may be further included to impart viscosity. The cellulose-based compound may be used by mixing one or more of carboxymethyl cellulose, hydroxypropyl methyl cellulose, methyl cellulose, or alkali metal salts thereof. In an embodiment, Na, K, or Li may be used as the alkali metal.

The dry binder may be a polymeric material capable of being fiberized, for example, polytetrafluoroethylene, polyvinylidene fluoride, a polyvinylidene fluoride-hexafluoropropylene copolymer, polyethylene oxide, or a combination thereof.

In an embodiment, the second electrode plate 40 may be electrically connected to a cap assembly (not shown) coupled to the cylindrical can. In an embodiment, the second electrode plate 40 functions as the positive electrode of the electrode assemblies 1 and 2, and the cap assembly may function as a positive electrode terminal of the secondary battery. For example, the second electrode plate 40 may be electrically connected to the cap assembly by a second electrode tab (not shown).

The separators 10 and 20 may be disposed between the first electrode plate 30 and the second electrode plate 40. For example, in the electrode assembly 1 wound in the form of a jelly roll, the first separator 10 may be interposed between the first electrode plate 30 and the second electrode plate 40, and the second separator 20 may be interposed between the second electrode plate 40 and the first electrode plate 30 in a radial direction of a winding axis.

In an embodiment, widthwise sizes of the first separator 10 and the second separator 20 may be the same. Based on FIGS. 2 and 3, the widthwise sizes of the first separator 10 and the second separator 20 may be in a direction parallel to a Y-axis.

While the first separator 10 and the second separator 20 travel toward the winder 130, both, or opposite, ends 12 and 14 in a width direction of the first separator 10 and both, or opposite, ends 22 and 24 in a width direction of the second separator 20 may be aligned in a thickness direction.

The separators 10 and 20 may prevent or substantially prevent a short circuit between the second electrode plate 40 and the first electrode plate 30 while allowing lithium ions to move between the second electrode plate 40 and the first electrode plate 30.

As the separators 10 and 20, polyethylene, polypropylene, polyvinylidene fluoride, or a multilayer film of two or more layers thereof may be used, and a mixed multilayer separator such as a polyethylene/polypropylene two-layer separator, a polyethylene/polypropylene/polyethylene three-layer separator, a polyethylene/polyethylene/polypropylene three-layer separator, or the like may be used.

The separators 10 and 20 may include a porous substrate and a coating layer including an organic material, an inorganic material, or a combination thereof located on one surface or both, or opposite, surfaces of the porous substrate.

The porous substrate may be a polymer film formed of a polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more thereof.

The organic material may include a polyvinylidene fluoride-based polymer or a (meth) acryl-based polymer.

In an embodiment, the inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in a single coating layer or may be present in a form in which a coating layer including an organic material and a coating layer including an inorganic material are stacked.

The first adjustment unit 300 is disposed upstream of the cameras 110 and 120 along a traveling direction of the first electrode plate 30. The first adjustment unit 300 adjusts a position of the first electrode plate 30 in a width direction of the first electrode plate 30.

The controller 500 calculates a first difference value, which is a difference value of a position value of the first electrode plate 30 with respect to a position value of the first separator 10, based on images detected through the cameras 110 and 120, and controls the operation of the first adjustment unit 300 such that the first difference value converges to a first reference value.

The secondary battery manufacturing device 100 may further include a second adjustment unit, or second adjuster, 400. The second adjustment unit 400 is disposed upstream of the cameras 110 and 120 along a traveling direction of the second electrode plate 40. The second adjustment unit 400 adjusts a position of the second electrode plate 40 in a width direction of the second electrode plate 40.

Based on FIGS. 2 to 6, the width direction of the first electrode plate 30 and the width direction of the second electrode plate 40 may be a direction parallel to the Y-axis.

The controller 500 may control operation of the second adjustment unit 400 similarly to controlling operation of the above-described first adjustment unit 300. The controller 500 may calculate a second difference value, which is a difference value of a position value of the second electrode plate 40 with respect to a position value of the first electrode plate 30, based on the images detected through the cameras 110 and 120, and control the operation of the second adjustment unit 400 such that the second difference value converges to a second reference value.

In an embodiment, the cameras 110 and 120 may include a first camera 110 forming an image by capturing a first side in a width direction of the electrode assembly 2 facing the winder 130, and a second camera 120 forming an image by capturing a second side in the width direction of the electrode assembly 2.

In an embodiment of the present disclosure, the controller 500 may calculate the first difference value, which is the difference value of the position value of the first electrode plate 30 with respect to the position value of the first separator 10, based on the image detected through the first camera 110, and control the operation of the first adjustment unit 300 such that the first difference value converges to the first reference value.

Further, the controller 500 may calculate the second difference value, which is the difference value of the position value of the second electrode plate 40 with respect to the position value of the first electrode plate 30, based on the image detected through the first camera 110, and control the operation of the second adjustment unit 400 such that the second difference value converges to the second reference value.

In another embodiment of the present disclosure, the controller 500 may calculate the first difference value, which is the difference value of the position value of the first electrode plate 30 with respect to the position value of the first separator 10, based on the image detected through the second camera 120, and control the operation of the first adjustment unit 300 such that the first difference value converges to the first reference value.

Further, the controller 500 may calculate the second difference value, which is the difference value of the position value of the second electrode plate 40 with respect to the position value of the first electrode plate 30, based on the image detected through the second camera 120, and control the operation of the second adjustment unit 400 such that the second difference value converges to the second reference value.

Herein, with reference to FIGS. 2 to 5, a method in which the controller 500 controls the operation of the first adjustment unit 300 and the operation of the second adjustment unit 400 based on the image detected through the first camera 110 will be described, according to an embodiment.

Referring to FIGS. 2 to 5, a position value RS of the first separator 10 may be a position value of one end 12 in the width direction of the first separator 10. A position value PE1 of the first electrode plate 30 may be a position value of a first end 32 in the width direction the first electrode plate 30. A position value PE2 of the second electrode plate 40 may be a position value of a first end 42 in the width direction of the second electrode plate 40.

In an embodiment, a widthwise size WS1 of the first separator 10 and a widthwise size WS2 of the second separator 20 may be the same. In an embodiment, the first separator 10 and the second separator 20 may overlap (e.g., precisely overlap) so as not to be offset in the width direction and may pass between the first light 200 and the cameras 110 and 120. Accordingly, the position value RS of the first separator 10 and the position value RS of the second separator 20 may be the same.

In an embodiment, the widthwise size WS1 of the first separator 10 may be larger than a widthwise size WE1 of the first electrode plate 30. In an embodiment, the widthwise size WE1 of the first electrode plate 30 may be larger than a widthwise size WE2 of the second electrode plate 40.

For example, based on FIG. 5, the above-described first difference value may be a value acquired by subtracting a current position value in the width direction of the first separator 10, that is, a current coordinate value RS in the Y-axis direction of the first end 12 in the width direction of the first separator 10 from a current position value in the width direction of the first electrode plate 30, that is, a current coordinate value PE1 in the Y-axis direction of the first end 32 in the width direction of the first electrode plate 30. That is, the first difference value may be PE1 - RS. In FIG. 5, PE1 is indicated by a dotted line and RS is indicated by a solid line.

The above-described first reference value may be a value acquired by subtracting a current position value RS in the width direction of the first separator 10 from a reference position value in the width direction of the first electrode plate 30, that is, a reference position value RE1 in the Y-axis direction of the first end 32 of the first electrode plate 30. That is, the first reference value may be RE1 - RS. In FIG. 5, RE1 is indicated by a dash-double dotted line.

The above-described second difference value may be a value acquired by subtracting a current position value PE1 in the width direction of the first electrode plate 30 from a current position value in the width direction of the second electrode plate 40, that is, a current coordinate value PE2 in the Y-axis direction of the first end 42 in the width direction of the second electrode plate 40. That is, the second difference value may be PE2 - PE1. In FIG. 5, PE2 is indicated by a solid line.

The above-described second reference value may be a value acquired by subtracting a reference position value RE1 in the width direction of the first electrode plate 30 from a reference position value in the width direction of the second electrode plate 40, that is, a reference position value RE2 in the Y-axis direction of the first end 42 of the second electrode plate 40. That is, the second reference value may be RE2 - RE1. In FIG. 5, RE2 is indicated by a dash-double dotted line.

The controller 500 controls the operation of the first adjustment unit 300 such that the first difference value (PE1 - RS) converges to the first reference value (RE1 - RS). The controller 500 also controls the operation of the second adjustment unit 400 such that the second difference value (PE2 - PE1) converges to the second reference value (RE2 - RE1).

Referring to FIGS. 1 to 7, in the secondary battery manufacturing device 100, the first separator 10, the first electrode plate 30, the second separator 20, and the second electrode plate 40 may sequentially overlap in that order away from the first light 200. In other words, the electrode assembly 2 facing the winder 130 may include the first separator 10, the first electrode plate 30, the second separator 20, and the second electrode plate 40 which sequentially overlap in that order of proximity to the first light 200.

In an embodiment, the secondary battery manufacturing device 100 may further include a second light 270 which projects visible light to the second electrode plate 40 located at an uppermost layer of the unwound electrode assembly 2. The second light 270 may be located at an opposite side of the first light 200 with the unwound electrode assembly 2 travelling toward the winder 130 therebetween, like the cameras 110 and 120.

Based on FIGS. 1 and 6, the first light 200 may be located under the electrode assembly 2, and the second light 270 and the cameras 110 and 120 may be located above the electrode assembly 2.

The cameras 110 and 120 may detect the visible light projected from the second light 270 and reflected from the second electrode plate 40. That is, the cameras 110 and 120 may detect the infrared light projected from the first light 200 and passing through the electrode assembly 2, and the visible light reflected from the second electrode plate 40. In an embodiment, for example, the cameras 110 and 120 may include image sensors which detect infrared light and visible light.

Referring to FIGS. 3 to 5, in the image detected through the cameras 110 and 120, a region where the first separator 10, the first electrode plate 30, the second separator 20, and the second electrode plate 40 are not present may be referred to as a background region, a region where the first separator 10 and the second separator 20 overlap and the first electrode plate 30 and the second electrode plate 40 are not present may be referred to as a first region, a region where the first separator 10, the first electrode plate 30, and the second separator 20 overlap and the second electrode plate 40 is not present may be referred to as a second region, and a region where the first separator 10, the first electrode plate 30, the second separator 20, and the second electrode plate 40 overlap may be referred to as a third region.

In the image detected through the cameras 110 and 120, the background region may appear brighter than the first region. This is because the first separator 10 and the second separator 20 are translucent, and, thus, the background region where the infrared light passing through air and incident on the cameras 110 and 120 is formed as an image appears brighter than the first region where the infrared light passing through the translucent first separator 10 and second separator 20 and incident on the cameras 110 and 120 is formed as an image.

The first region may appear brighter than the second region. This is because the first electrode plate 30 is opaque, and, thus, the first region appears brighter than the second region where the infrared light passing through the opaque first electrode plate 30 and incident on the cameras 110 and 120 is formed as an image.

The third region may appear brighter than the second region. The second electrode plate 40 is opaque, but the third region where the visible light projected from the second light 270, reflected from the second electrode plate 40, and incident on the cameras 110 and 120 is formed as an image may be bright. Accordingly, the third region may appear brighter than the second region.

The second region may be located between the first region and the third region. Since the darkest second region among the first region, the second region, and the third region is located in the middle, and the first region and the third region are spaced apart with the second region therebetween, boundaries of the background region, the first region, the second region, and the third region may be distinguished from the images detected through the cameras 110 and 120.

In an embodiment, a wavelength range of the infrared light projected by the first light 200 may be, for example, 700 to 1000 nanometers (nm). In this case, the boundary between the background region and the first region, the boundary between the first region and the second region, and the boundary between the second region and the third region may be clearly identified.

If the unwound electrode assembly passing between the first light 200 and the cameras 110 and 120 includes only the first separator 10 and the first electrode plate 30, and does not include the second separator 20 and the second electrode plate 40, and in the image detected through the cameras 110 and 120, when a region where the first separator 10 and the first electrode plate 30 are not present is referred to as a background region, a region where the first separator 10 is present but the first electrode plate 30 is not present is referred to as a first region, and a region where the first separator 10 and the first electrode plate 30 overlap is referred to as a second region, the background region may appear brighter than the first region, and the first region may appear brighter than the second region. Accordingly, the boundaries of the background region, the first region, and the second region may be distinguished from the image detected through the cameras 110 and 120.

In an embodiment, the first light 200 may include a plurality of infrared light light-emitting diodes (LEDs) 226 and an infrared light transmission roller 210.

The plurality of infrared light LEDs 226 are disposed along the width direction of the first separator 10 and project infrared light to the first separator 10 and the first electrode plate 30. In an embodiment, as shown in FIG. 6, the plurality of infrared light LEDs 226 may be arranged in a row in the Y-axis direction. The plurality of infrared light LEDs 226 may project infrared light in the positive (+) Z-axis direction to the unwound electrode assembly 2.

For example, the plurality of infrared light LEDs 226 may be included in an infrared light LED module 220. In an embodiment, the infrared light LED module 220 may include the plurality of infrared light LEDs 226, a printed circuit board (PCB) (not shown) on which the infrared light LEDs 226 are electrically mounted, and an LED bracket 221 which supports the plurality of infrared light LEDs 226 and the PCB. The LED bracket 221 may extend in the width direction of the electrode assembly 2.

The infrared light transmission roller 210 has a circular cross-section and extends in the width direction of the first separator 10. For example, the infrared light transmission roller 210 may be a tube-shaped member. The plurality of infrared light LEDs 226 may be accommodated in the infrared light transmission roller 210. The infrared light projected from the infrared light LEDs 226 may be transmitted through the infrared light transmission roller 210.

In an embodiment, the first light 200 may include a first light frame 201, an LED module support 240, and a bearing 230.

The LED module support 240 supports an end portion in a longitudinal direction of the infrared light LED module 220. For example, the LED module support 240 may support an end portion in a longitudinal direction of the LED bracket 221. The first light frame 201 may fix and support the LED module support 240. A pair of LED module supports 240 may be provided to support both, or opposite, end portions in the longitudinal direction of the LED bracket 221.

The bearing 230 rotatably supports the infrared light transmission roller 210 with respect to the LED module support 240. The bearing 230 is interposed between the LED module support 240 and the infrared light transmission roller 210.

In an embodiment, the bearing 230 may include an inner ring 231 which is in contact (e.g., close contact) with an outer surface of the LED module support 240, an outer ring 234 which is in contact (e.g., close contact) with an inner surface of the infrared light transmission roller 210, and a bearing material 238, such as one or more bearing ball, interposed between the inner ring 231 and the outer ring 234. A pair of bearings 230 may be provided to support both, or opposite, ends in a longitudinal direction of the infrared light transmission roller 210.

With this configuration, the infrared light transmission roller 210 may support the first separator 10 and may rotate while in contact with the first separator 10 as the first separator 10 travels. When the infrared light transmission roller 210 rotates, the infrared light LED module 220 including the plurality of infrared light LEDs 226 may not rotate. Accordingly, the infrared light may be projected to the electrode assembly 2 at a constant intensity while the electrode assembly 2 travels toward the winder 130.

Referring to FIGS. 1, 8, and 9, in an embodiment, the first adjustment unit 300 may include a first adjustment roller 310, a first adjustment roller frame 301, and a first widthwise actuator 330. The first adjustment roller 310 may be in contact (e.g., close contact) with the first electrode plate 30 and may move in a width direction WD1 of the first electrode plate 30. The first adjustment roller frame 301 rotatably supports the first adjustment roller 310.

The first adjustment roller 310 may include a roller body 313 extending in the width direction of the first electrode plate 30, and a pair of roller shafts 317 extending in an axial direction of the roller body 313 from both, or opposite, ends in a longitudinal direction of the roller body 313 and rotatably supported by the first adjustment roller frame 301. The roller body 313 may include a friction layer (not shown) on an outer surface for increasing a frictional force with the first electrode plate 30. The friction layer may be formed of, for example, a rubber material.

In an embodiment, a pair of first adjustment rollers 310 may be provided. One of the pair of first adjustment rollers 310 may be located to face a side surface 36 in the thickness direction of the first electrode plate 30, and the other may be located to face another side surface 37 in the thickness direction of the first electrode plate 30.

The first widthwise actuator 330 moves the first adjustment roller frame 301 in the width direction WD1 of the first electrode plate 30 according to an operation control signal of the controller 500. In an embodiment, the pair of first adjustment rollers 310 may move in a same movement direction and with a same movement amount as a movement direction and a movement amount of the first adjustment roller frame 301

As described with reference to FIG. 5, the first widthwise actuator 330 may move the first adjustment roller frame 301 such that the first difference value converges to the first reference value.

The first adjustment roller 310 may move in a thickness direction TD1 of the first electrode plate 30. The first adjustment roller 310 may be spaced apart from the first electrode plate 30 as shown by a dash-double dotted line in FIG. 8 when the first difference value is equal to the first reference value. In this case, the pair of first adjustment rollers 310 may move in opposite directions.

In an embodiment of the present disclosure, when the first difference value is equal to the first reference value, only one of the pair of first adjustment rollers may move away from the other first adjustment roller in the thickness direction of the first electrode plate.

Referring to FIGS. 1, 8, and 9, the first adjustment unit 300 may include the first adjustment roller 310, the first adjustment roller frame 301, and the first widthwise actuator 330. The first adjustment roller 310 may be in contact (e.g., close contact) with the first electrode plate 30 and may move in the width direction WD1 of the first electrode plate 30. The first adjustment roller frame 301 rotatably supports the first adjustment roller 310.

The first adjustment roller 310 may include the roller body 313 extending in the width direction of the first electrode plate 30, and the pair of roller shafts 317 extending in an axial direction of the roller body 313 from both, or opposite, ends in a longitudinal direction of the roller body 313 and rotatably supported by the first adjustment roller frame 301. The roller body 313 may include the friction layer (not shown) on the outer surface for increasing the frictional force with the first electrode plate 30. The friction layer may be formed of, for example, a rubber material.

A pair of first adjustment rollers 310 may be provided. One of the pair of first adjustment rollers 310 may be located to face the first side surface 36 in the thickness direction of the first electrode plate 30, and the other may be located to face the second side surface 37 in the thickness direction of the first electrode plate 30.

The first widthwise actuator 330 moves the first adjustment roller frame 301 in the width direction WD1 of the first electrode plate 30 according to the operation control signal of the controller 500. Accordingly, the pair of first adjustment rollers 310 may move in the same movement direction and with the same movement amount as the movement direction and the movement amount of the first adjustment roller frame 301

As described with reference to FIG. 5, the first widthwise actuator 330 may move the first adjustment roller frame 301 such that the first difference value converges to the first reference value.

The first adjustment roller 310 may move in the thickness direction TD1 of the first electrode plate 30. The first adjustment roller 310 may be spaced apart from the first electrode plate 30 as shown by the dash-double dotted line in FIG. 8 when the first difference value is equal to the first reference value. In this case, the pair of first adjustment rollers 310 may move in opposite directions. The first adjustment roller 310 may move from a position spaced apart from the first electrode plate 30 in a direction in which it comes into contact (e.g., close contact) with the first electrode plate 30 when the first difference value is detected to be different from the first reference value.

Although not shown, the first adjustment unit 300 may further include a first thickness direction driver that moves the first adjustment roller 310 in the thickness direction TD1 of the first electrode plate 30.

In an embodiment of the present disclosure, when the first difference value is equal to the first reference value, only one of the pair of first adjustment rollers may move away from the other first adjustment roller in the thickness direction of the first electrode plate.

Referring to FIGS. 1, 8, and 9, the second adjustment unit 400 may include a second adjustment roller 410, a second adjustment roller frame 401, and a second widthwise actuator 430. The second adjustment roller 410 may be in contact (e.g., close contact) with the second electrode plate 40 and may move in a width direction WD2 of the second electrode plate 40. The second adjustment roller frame 401 rotatably supports the second adjustment roller 410.

The second adjustment roller 410 may include a roller body 413 extending in the width direction of the second electrode plate 40, and a pair of roller shafts 417 extending in an axial direction of the roller body 413 from both, or opposite, ends in a longitudinal direction of the roller body 413 and rotatably supported by the second adjustment roller frame 401. The roller body 413 may include a friction layer (not shown) on an outer surface for increasing a frictional force with the second electrode plate 40. The friction layer may be formed of, for example, a rubber material.

In an embodiment, a pair of second adjustment rollers 410 may be provided. One of the pair of second adjustment rollers 410 may be located to face the first side surface 46 in the thickness direction of the second electrode plate 40, and the other may be located to face the second side surface 47 in the thickness direction of the second electrode plate 40.

The second widthwise actuator 430 moves the second adjustment roller frame 401 in the width direction WD2 of the second electrode plate 40 according to the operation control signal of the controller 500. Accordingly, the pair of second adjustment rollers 410 may move in a same movement direction and with a same movement amount as a movement direction and a movement amount of the second adjustment roller frame 401.

As described with reference to FIG. 5, the second widthwise actuator 430 may move the second adjustment roller frame 401 such that the second difference value converges to the second reference value.

The second adjustment roller 410 may move in a thickness direction TD2 of the second electrode plate 40. The second adjustment roller 410 may be spaced apart from the second electrode plate 40 as shown by a dash-double dotted line in FIG. 9 when the second difference value is equal to the second reference value. In this case, the pair of second adjustment rollers 410 may move in opposite directions. The second adjustment roller 410 may move from a position spaced apart from the second electrode plate 40 in a direction in which it comes into contact (e.g., close contact) with the second electrode plate 40 when the second difference value is detected to be different from the second reference value.

In an embodiment, although not shown, the second adjustment unit 400 may further include a second thickness direction driver to move the second adjustment roller 410 in the thickness direction TD2 of the second electrode plate 40.

In an embodiment of the present disclosure, when the second difference value is equal to the second reference value, only one of the pair of second adjustment rollers may move away from the other second adjustment roller in the thickness direction of the second electrode plate.

According to embodiments of the present disclosure, an electrode plate can be correctly aligned with respect to a separator in a state in which the separator and the electrode plate constituting an electrode assembly overlap. Accordingly, a defect rate of a jelly roll-shaped electrode assembly formed by winding the separator and the electrode plate and a defect rate of a cylindrical secondary battery including the same can be reduced.

According to embodiments of the present disclosure, a position of the electrode plate with respect to the separator is correctly aligned before the jelly roll-shaped electrode assembly is completed, and a quantity of jelly roll-shaped electrode assemblies discarded due to defects can be reduced. Accordingly, the cost of secondary batteries can be reduced.

However, aspects and features of the present invention are not limited to those described above and other aspects and features not mentioned will be clearly understood by those skilled in the art from the detailed description provided above.

Although the present invention has been described with reference to some embodiments and drawings illustrating aspects thereof, the present invention is not limited thereto. Various modifications and variations can be made by a person skilled in the art to which the present invention belongs within the scope of claims as appended hereto.

## Claims

1. A secondary battery manufacturing device comprising:
a first light configured to project infrared (IR) light from an outside of a first side in a thickness direction of a first electrode plate and a first separator, that overlap while traveling, to the first electrode plate and the first separator;
a camera configured to detect the infrared light from an outside of a second side in the thickness direction of the first electrode plate and the first separator such that positions of the first electrode plate and the first separator are measured;
a first adjuster that is located upstream of the camera along a traveling direction of the first electrode plate and configured to adjust a position of the first electrode plate in a width direction of the first electrode plate; and
a controller configured to calculate a first difference value, which is a difference value of a position value of the first electrode plate with respect to a position value of the first separator, based on an image detected through the camera, and control operation of the first adjuster such that the first difference value converges to a first reference value.

2. The secondary battery manufacturing device as claimed in claim 1, wherein the position value of the first separator is a position value of a first end in a width direction of the first separator, and
the position value of the first electrode plate is a position value of a first end in the width direction of the first electrode plate.

3. The secondary battery manufacturing device as claimed in claim 2, wherein, if a widthwise size of the first separator is larger than a widthwise size of the first electrode plate, and in the image, if a region where the first separator and the first electrode plate are not present is referred to as a background region, a region where the first separator is present but the first electrode plate is not present is referred to as a first region, and a region where the first separator and the first electrode plate overlap is referred to as a second region, the background region appears brighter than the first region, and the first region appears brighter than the second region.

4. The secondary battery manufacturing device as claimed in claim 2 or claim 3, wherein the first adjuster comprises a first adjustment roller that is in contact with the first electrode plate and moves in the width direction of the first electrode plate.

5. The secondary battery manufacturing device as claimed in claim 4, wherein the first adjustment roller is spaced apart from the first electrode plate when the first difference value is equal to the first reference value.

6. The secondary battery manufacturing device as claimed in any one of the preceding claims, wherein a second electrode plate and a second separator overlap the first electrode plate and the first separator and pass between the first light and the camera,
the secondary battery manufacturing device further comprises a second adjuster that is located upstream of the camera along a traveling direction of the second electrode plate and configured to adjust a position of the second electrode plate in a width direction of the second electrode plate, and
the controller is configured to calculate a second difference value, which is a difference value of a position value of the second electrode plate with respect to a position value of the first electrode plate based on the image, and control operation of the second adjuster such that the second difference value converges to a second reference value.

7. The secondary battery manufacturing device as claimed in claim 6, further comprising a second light configured to project visible light to the second electrode plate,
wherein the camera is configured to detect visible light projected from the second light and reflected from the second electrode plate.

8. The secondary battery manufacturing device as claimed in claim 6 or claim 7, wherein the position value of the second electrode plate is a position value of a first end in the width direction of the second electrode plate.

9. The secondary battery manufacturing device as claimed in any one of claims 6 to 8, wherein a widthwise size of the first separator and a widthwise size of the second separator are the same,
the widthwise size of the first separator is larger than a widthwise size of the first electrode plate, and
the widthwise size of the first electrode plate is larger than a widthwise size of the second electrode plate.

10. The secondary battery manufacturing device as claimed in any one of claims 6 to 9, wherein the first separator, the first electrode plate, the second separator, and the second electrode plate sequentially overlap in that order away from the first light.

11. The secondary battery manufacturing device as claimed in any one of claims 6 to 10, wherein, in the image, if a region where the first separator, the first electrode plate, the second separator, and the second electrode plate are not present is referred to as a background region, a region where the first separator and the second separator overlap and the first electrode plate and the second electrode plate are not present is referred to as a first region, a region where the first separator, the first electrode plate, and the second separator overlap and the second electrode plate is not present is referred to as a second region, and a region where the first separator, the first electrode plate, the second separator, and the second electrode plate overlap is referred to as a third region, the background region appears brighter than the first region, the first region appears brighter than the second region, the third region appears brighter than the second region, and
the second region is located between the first region and the third region.

12. The secondary battery manufacturing device as claimed in any one of claims 6 to 11, wherein the second adjuster comprises a second adjustment roller that is in contact with the second electrode plate and moves in the width direction of the second electrode plate.

13. The secondary battery manufacturing device as claimed in claim 12, wherein the second adjustment roller is spaced apart from the second electrode plate when the second difference value is equal to the second reference value.

14. The secondary battery manufacturing device as claimed in any one of the preceding claims, wherein the first light comprises a plurality of infrared light light-emitting diodes (LEDs) that are arranged along a width direction of the first separator and configured to project the infrared light to the first separator and the first electrode plate.

15. The secondary battery manufacturing device as claimed in claim 14, wherein the first light comprises an infrared light transmission roller that has a circular cross-section and extends in the width direction of the first separator such that the plurality of infrared light LEDs is accommodated therein, transmits the infrared light, supports the first separator, and rotates while in contact with the first separator as the first separator travels.
